Europäisches Patentamt

European Patent Office

Office européen des brevets

(19)

(11) Veröffentlichungsnummer: **0 156 936**
**B1**

# (12) EUROPÄISCHE PATENTSCHRIFT

(45) Veröffentlichungstag der Patentschrift:
09.12.87

(21) Anmeldenummer: 84103648.6

(22) Anmeldetag: 03.04.84

(51) Int. Cl.⁴: **F 16 K 27/06**, F 16 K 5/08,
B 21 D 51/08

(54) Verfahren zum Herstellen eines kugelförmigen Schaltgliedes für Fluid-Absperrorgane.

(43) Veröffentlichungstag der Anmeldung:
09.10.85 Patentblatt 85/41

(45) Bekanntmachung des Hinweises auf die Patenterteilung:
09.12.87 Patentblatt 87/50

(84) Benannte Vertragsstaaten:
CH DE FR IT LI NL SE

(56) Entgegenhaltungen:
DE - B - 1 185 434
GB - A - 406 660
US - A - 3 505 718

(73) Patentinhaber: Klinger AG, Baarerstrasse 10,
CH-6301 Zug (CH)

(72) Erfinder: Schamann, Helmut, Möllersdorfer Strasse 31,
A-2353 Guntramsdorf (AT)

(74) Vertreter: Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)

EP 0 156 936 B1

## Beschreibung

Die Erfindung betrifft ein Verfahren zum Herstellen eines kugelförmigen Schaltgliedes für Fluid-Absperrorgane, das aus einer Durchgangsöffnungen aufweisenden Kugelschale und einem die Durchgangsöffnungen im Innern der Schale verbindenden Leitrohr besteht, wobei von einem Schalenrohling mit einem rohrförmigen Ende ausgegangen wird, welches unter Bildung einer der Durchgangsöffnungen kugelig einwärts verformt wird.

Bisher werden solche Schaltglieder so gefertigt, dass zunächst die Kugelschale vollständig fertiggestellt wird und danach das Leitrohr zwischen den Durchgangsöffnungen eingeschweisst (z.B. DE-B-1 185 434) oder durch spanlose Aufweitung seiner Enden eingeklemmt wurde (z.B. GB-A-406 660).

Dabei wird für die Fertigung der Kugelschale ebenfalls von einem Rohrabschnitt ausgegangen, dessen Enden kugelförmig nach innen spanlos verformt werden.

Aufgabe der Erfindung ist es, die Fertigung des Absperrorgans durch Verringerung der Zahl der Arbeitsgänge zu vereinfachen.

Diese Aufgabe wird gemäss der Erfindung dadurch gelöst, dass das Leitrohr vor der Einwärtsverformung des Schalenrohlings koaxial in diesen eingesetzt wird un bei der Verformung zwischen den die Durchgangsöffnungen begrenzenden Rändern eingespannt wird.

Im Ergebnis erhält man ein Schaltglied, bei dem nicht die Ränder der Durchgangsöffnungen der Kugelschale an dem Mantel des Leitrohrs anliegen, sondern bei dem die Leitrohrenden sich stirnseitig innen hinter den Rändern der Durchgangsöffnungen abstützen. Dadurch ist das Leitrohr in seiner axialen Lage fixiert und, wegen der Kugelform der Schale, auch in allen anderen Richtungen.

Man kann das Leitrohr bereits vor Beginn der Verformung des Rohlings der Kugelschale einfügen oder aber auch, was bevorzugt ist, die Kugelschale zunächst an einem Ende fertigstellen, dann das Leitrohr einsetzen und dann das andere Ende des Rohlings verformen.

Die beigefügten Zeichnungen dienen der detaillierten Erläuterung der Erfindung.

Fig. 1 zeigt im Axialschnitt, stark schematisiert, ein Werkzeug zum Durchführen des Verfahrens gemäss der Erfindung, und

Fig. 2 ist ein entsprechender Axialschnitt durch das fertiggestellte Schaltglied.

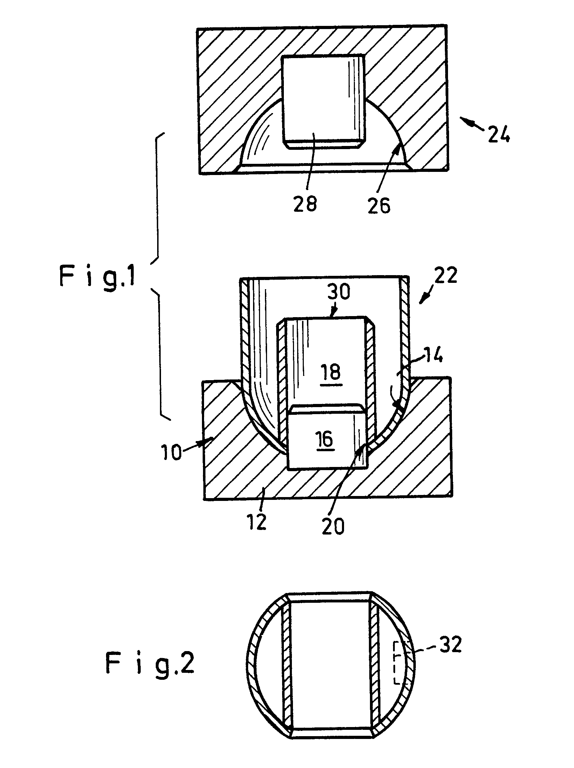

Gemäss Fig. 1 umfasst das Werkzeug einen Support 10, bestehend aus einem Grundkörper 12 mit etwa halbkugeliger Ausnehmung 14, in die ein Bolzen 16 ragt. Die Ausnehmung 14 ist mit ihrer Kontur an die Aussenkontur der Kugelschale angepasst; aus Fertigungsgründen sind Grundkörper und Bolzen zweiteilig ausgebildet, es könnte aber auch ein ein-oder mehrteiliger Support verwendet werden. Der Durchmesser des Bolzens 16 entspricht dem Innendurchmesser des Leitrohrs 18, der seinerseits wiederum der lichten Weite der Durchgangsöffnung 20 einer Kugelschale eintspricht. In den Support eingesetzt dargestellt sind der Kugelschalenrohling 22, bereits an einem Ende zur Halbkugel nach innen verformt, und (danach eingesetzt) das Leitrohr 18. Das Werkzeug weist ferner eine Verformungsmatrize 24 auf, die dem Support spiegelbildlich gleich ist mit Ausnehmung 26 und Bolzen 28.

Der letzte Verformungsarbeitsgang erfolgt dann durch Einwärtsverformen des freien Endes des Rohlings 22, zu welchem Zweck die beiden Werkzeugteile in eine entsprechende Presse eingespannt werden. Dabei legt sich der Rand der Kugelschale auch am anderen Ende 30 des Leitrohrs über dessen Stirnkante, so dass man schliesslich das in Fig. 2 dargestellte Schaltglied erhält. Die Eingriffsöffnung 32, die in Fig. 2 gestrichelt angedeutet ist, wird nachträglich eingebracht.

## Patentansprüche

1. Verfahren zum Herstellen eines kugelförmigen Schaltgliedes für Fluid-Absperrorgane, das aus einer Durchgangsöffnungen aufweisenden Kugelschale und einem die Durchgangsöffnungen im Innern der Schale verbindenden Leitrohr (18) besteht, wobei von einem Schalenrohling (22) mit einem rohrförmigen Ende ausgegangen wird, welches unter Bildung einer der Durchgangsöffnungen (20) kugelig einwärts verformt wird, dadurch gekennzeichnet, dass das Leitrohr (18) vor der Einwärtsverformung des Schalenrohlings (22) koaxial in diesen eingesetzt wird und bei der Verformung zwischen den die Durchgangsöffnungen begrenzenden Rändern eingespannt wird.

2. Verfahren nach Anspruch 1, dadurch gekennzeichnet, dass ein Rohrabschnitt an einem Ende unter Ausbildung einer Durchgangsöffnung (20) einwärts kugelig verformt wird, dass danach das Leitrohr (18) eingesetzt wird und schliesslich die Verfor-mung des anderen Rohrabschnittendes vorgenom-men wird.

3. Vorrichtung zum Durchführen des Verfahrens nach Anspruch 2, gekennzeichnet durch einen Support (10) mit etwa halbkugeliger Ausnehmung (14), komplementär zur Kugelform des einen Rohrabschnittendes und mit einem zentral in die Ausnehmung ragenden Bolzen (16) mit einem dem Durchmesser der Durchgangsöffnung (20) angepassten Durchmesser, auf den das Leitrohr (18) aufstreckbar ist, und durch ein zu dem Support (10) im wesentli-chen spiegelbildlich gleich ausgebildetes Verfor-mungswerkzeug.

## Claims

1. Process for the manufacture of a spherical switching member for fluid cut-off elements, which consists of a spherical shell having through openings, and a guide pipe (18) connecting the through openings in the interior of the shell, starting with a shell black (22) having a tubular end which is deformed spherically inwards to form one of the through openings (20), characterised in that the guide pipe (18) is inserted coaxially into the shell blank (22) before the inward deformation of the latter and during the deformation is clamped between the edges defining the through openings.

2. Process according to claim 1, characterised in that a pipe section is deformed spherically inwards at one end to form a through opening (20), the guide pipe (18) is then inserted and finally the deformation of the other end of the pipe section is effected.

3. Device for carrying out the process according to claim 2, characterised by a support (10) having an approximately hemispherical recess (14), complementary to the spherical shape of one end of the pipe section, and having a stud (16) that projects centrally into the recess and is of a diameter matched to the diameter of the through opening (20), onto which stud the guide pipe (18) can be placed, and by a deformation tool which is constructed to be substantially a mirror-inverted image of the support (10).

**Revendications**

1. Procédé de fabrication d'un dispositif de raccordement pour organe d'arrêt de fluide, qui se compose d'une enveloppe sphérique présentant des ouvertures de passage et d'un conduit (18) reliant les ouvertures de passage à l'intérieur de l'enveloppe, dans lequel on est parti d'une ébauche (22) d'enveloppe avec une extrémité en forme de tube, laquelle est déformée vers l'intérieur de manière sphérique avec constitution de l'une des ouvertures de passage (20), caractérisé par le fait que le conduit (18), avant la déformation vers l'intérieur de l'ébauche d'enveloppe (22), est introduit de manière coaxiale dans celle-ci et que, lors du formage, ce conduit est enserré entre les bords délimitant les ouvertures de passage.

2. Procédé suivant la revendication 1, caractérisé par le fait qu'une section de tube est déformée vers l'intérieur de manière sphérique à une extrémité avec constitution d'une ouverture de passage (20), qu'ensuite le conduit (18) est introduit et qu'enfin on procède au formage de l'autre extrémité de la section de tube.

3. Dispositif pour la mise en oeuvre du procédé suivant la revendication 2, caractérisé en ce qu'il est constitué d'un support (10) avec évidement (14) sensiblement hémisphérique, complémentaire de la forme sphérique d'une extrémité de tube et d'un poinçon (16) faisant saillie en position centrale dans l'évidement, poinçon d'un diamètre adapté au diamètre de l'ouverture de passage (20) et sur lequel le conduit (18) peut s'emboîter, et d'un outil de formage constitué pour l'essentiel de manière identique symétriquement par rapport au support (10).

F i g.1

F i g.2